# EUROPÄISCHE PATENTSCHRIFT

(11) **EP 0 384 511 B1**
(45) Veröffentlichungstag und Bekanntmachung des Hinweises auf die Patenterteilung: **30.11.1994**
(21) Anmeldenummer: 90200295.5
(22) Anmeldetag: 09.02.1990
(51) Int. Cl.: G11B 15/675

(54) **Magnetbandkassettengerät mit einem zum Abspielen von Magnetbandkassetten dienenden Laufwerk**
Magnetic-tape cassette apparatus with a drive for reproducing magnetic-tape cassettes
Appareil à cassette à bande magnétique avec un dispositif d'entraînement pour la reproduction de cassettes à bande magnétique

(30) Priorität: 15.02.1989 DE 3904483; 05.05.1989 DE 3914789
(43) Veröffentlichungstag der Anmeldung: 29.08.1990
(73) Patentinhaber: Philips Patentverwaltung GmbH, 22335 Hamburg (DE); Philips Electronics N.V., 5621 BA Eindhoven (NL)
(72) Erfinder: Klös-Hein, Karl, D-6301 Wettenberg 2 (DE); Hermanni, Hans-Georg, D-6349 Sinn (DE)
(74) Vertreter: von Laue, Hanns-Ulrich, Dipl.-Ing.

(56) Entgegenhaltungen:
- EP-A- 0 366 191
- US-A- 3 882 542
- US-A- 3 947 884
- US-A- 4 546 396
- US-A- 4 752 844

## Beschreibung

Die Erfindung bezieht sich auf ein Magnetbandkassettengerät mit einem zum Abspielen von Magnetbandkassetten dienenden Laufwerk, das einen Kassettenlademechanismus aufweist, zu dem ein die Magnetbandkassette aufnehmender Kassettenschacht gehört, der mit seitlich vorstehenden Bolzen in ortsfesten vertikalen Führungen zum Absenken in eine Spielposition und zum Anheben in eine Auswurfposition geführt ist, wobei die Bolzen zusätzlich durch zur Vertikalen geneigte Schlitze eines Schiebers hindurchgreifen.

Ein derartiges Magnetbandkassettengerät ist aus der DE-PS 32 41 361 bekannt. Seitliche Bolzen eines Kassettenschachtes greifen durch L-förmige Schlitze eines vertikalen Gehäuseteiles hindurch, wobei die L-förmigen Schlitze jeweils einen vertikalen Arm und einen horizontalen Arm aufweisen. Schieberplatten, die ebenfalls von den Bolzen des Kassettenschachtes durchgriffen werden, haben schräge Schlitze, die gegenüber den vertikalen Armen der L-förmigen Schlitze alle in gleicher Richtung geneigt sind. Werden die Platten mit den schrägen Schlitzen in Einzug- oder Auswerfrichtung bewegt, dann fährt der Kassettenschacht mit seinen Bolzen zunächst in horizontaler Richtung bis zu dem Übergangsbereich zwischen den horizontalen und vertikalen Armen der L-förmigen Schlitze. Danach senkt er sich in den vertikalen Armen der L-förmigen Schlitze ab. Bei dieser Konstruktion mit in horizontaler und vertikaler Richtung verschieblichem Kassettenschacht muß der Kassettenschacht ausreichend hoch über den Wickeldornen geführt sein, um Kollisionen zu vermeiden. Wenn es bei einem Laufwerk darum geht, die Bauhöhe herabzusetzen, dann führt der Zwang zur horizontalen Bewegung unvermeidlich zu einer größeren Bauhöhe.

Aus der DE-PS 37 17 587 ist es darüber hinaus bekannt, den Kassettenschacht mittels eines Lifthebels auf und ab zu bewegen, wobei der Lifthebel um eine Achse quer zur Einzieh- und Auswerfrichtung der Magnetbandkassette verschwenkbar ist. Der Kassettenmitnehmer ist in einem in Einzieh- und Auswerfrichtung verlaufenden Schlitz des Lifthebels geführt. Der Betätigungshebel greift am Kassettenmitnehmer an und schiebt diesen nach Maßgabe einer in Einschubrichtung verschiebbaren Steuerstange in Einzieh- oder Auswerfrichtung.

Es ist Aufgabe der Erfindung, ein Magnetbandkassettengerät mit einem Laufwerk der eingangs erwähnten Art zu schaffen, bei dem bei ausreichend großem Einzug- und Auswerfweg der Magnetbandkassette der Kassettenschacht ausschließlich nur eine vertikale Bewegung ausführt.

Die gestellte Aufgabe ist erfindungsgemäß dadurch gelöst, daß die Führungen nur eine vertikale Längserstreckung aufweisen zum Absenken und Anheben des Kassettenscshachtes und daß die Einzugs- und Auswerfbewegungen der Magnetbandkassette ein Kassettenmitnehmer übernimmt, der von einem Betätigungshebel zwischen einer Auswerf- und einer Einzugstellung bewegbar ist, wobei über die Verschiebebewegung des Schiebers zugleich der mit dem Schieber verschwenkbar gekuppelte Betätigungshebel zum Einziehen und Auswerfen der Kassette bewegt wird.

Der nur heb- und senkbar gehaltene Kassettenschacht ist dabei von den Kassettenbewegungen unabhängig gemacht, weil der Betätigungshebel mit einem so großen Übersetzungsverhältnis ausgelegt sein kann, daß er allein mit Hilfe des Kassettenmitnehmers die Kassette um eine ausreichend große Weglänge einziehen und auswerfen kann. Weitere Vorteile sind die Verringerung der Bauhöhe und eine mechanisch einfache Aufteilung in vertikale Bewegungen des Schachtes und horizontale Bewegungen der Kassette.

Nach einer weiteren Ausgestaltung der Erfindung ist vorgesehen, daß der Kassettenmitnehmer in einem Schlitz des Schiebers geführt ist. Der Schieber kann zu diesem Zweck beispielsweise über den Kassettenschacht hinweggreifen.

Nach einer weiteren Ausgestaltung der Erfindung ist vorgesehen, daß der Betätigungshebel um eine seitlich von Schieber und Kassettenschacht angeordnete Lagerachse am Chassis des Laufwerkes schwenkbar angeordnet ist. Die Lagerung des Betätigungshebels seitlich von Schieber und Schacht verlegt die Kupplung zwischen Schieber und Betätigungshebel in Richtung auf den Schieber, wodurch dieser über einen kurzen Hebelarm zwischen seiner Lagerung an der Lagerachse und der Kupplung mit dem Schieber einerseits und einem langen Hebelarm zwischen der Kupplung mit dem Schieber und dem Angriffspunkt am Kassettenmitnehmer andererseits den Kassettenmitnehmer und dabei die Kassette um große Weglängen in Einzug- und Auswerfrichtung verschieben kann.

Nach einer weiteren Ausgestaltung der Erfindung ist vorgesehen, daß am Schieber ein Kupplungsstift vorgesehen ist, der durch einen Schlitz des Betätigungshebels greift und dafür sorgt, daß sich der Betätigungshebel beim Bewegen des Schiebers in Einzieh- oder Auswerfrichtung um ihn verschwenkt. Ein Stift am Schieber, der durch einen Schlitz des Betätigungshebels greift, stellt die einfachste Art einer Kupplung zwischen Schieber und Betätigungshebel dar.

Nach einer weiteren Ausgestaltung der Erfindung ist vorgesehen, daß am Betätigungshebel eine Rückführfeder vorgesehen ist, mittels der der Betätigungshebel bei nicht in Betrieb gesetztem Laufwerk den Kassettenmitnehmer in die Auswerfstellung der Kassette schiebt. Eine solche Rückführfeder erlaubt es, bei Fehlfunktionen des Laufwerkes die Kassette immer zurückzuschieben in die Stellung, aus der sie mit der Hand herausziehbar ist.

Nach einer weiteren Ausgestaltung der Erfindung ist vorgesehen, daß der Betätigungshebel die Lagerachse mit einer Lagerhülse übergreift, die einen Ausleger aufweist, der einen Anschlag für einen Endarm der Rückführfeder bildet, die mit einem Wendelteil zwischen der Lagerachse und der Lagerhülse angeordnet ist, und daß der andere Endarm der Rückführfeder den Kupplungsstift hintergreift. Infolge dieser Anordnung spannt sich die Rückführfeder nur, wenn der Betätigungshebel in Einzugsrichtung betätigt wird und sich der Schieber nicht gleichzeitig in Einschubrichtung verschiebt. Die dadurch erzielte Vorspannung sorgt dafür, daß der Betätigungshebel bei nicht zurückweichendem Schieber bzw. Mitnehmerstift aufgrund der ihm verliehenen Vorspannung die Kassette wieder aus dem Schacht herausdrängt. Andererseits wird die Feder nicht gespannt, wenn der Einzug des Laufwerkes in Gang gesetzt wird und der Schieber die Einzugbewegung übernimmt.

Nach einer weiteren Ausgestaltung der Erfindung ist vorgesehen, daß die Schlitze des Schiebers in dem Bereich, in dem die Bolzen den Kassettenschacht nahezu in die Spielstellung abgesenkt haben, zur Lademechanismus-Einschubseite hin abknicken in einen zum Schachtverlauf leicht geneigt verlaufenden Schlitzteil und daß die Bolzen dann, wenn der Schieber seine Endstellung erreicht hat, in dem geneigten Bereich gegen die obere Schlitzwände gedrückt werden. Durch den geneigten Endverlauf der Schieberschlitzenden wird sichergestellt, daß der Kassettenschacht gegen seine Auflage in der Spielstellung gedrückt ist. Durch dieses Festdrücken werden Klappergeräusche vermieden.

Nach einer weiteren Ausgestaltung der Erfindung ist vorgesehen, daß eine Belastungsfeder vorgesehen ist, die den Schieber wenigstens am Ende der Einschubbewegung in seine hintere Endstellung drückt.

Eine derartige Belastungsfeder sorgt immer dafür, daß der Schieber sicher seine Endstellung erreicht und dementsprechend auch der Kassettenschacht sicher in seine Spielstellung abgesenkt ist.

Nach einer weiteren Ausgestaltung der Erfindung ist vorgesehen, daß die Belastungsfeder auseinander strebende Federarme (Haarnadelfeder) aufweist, von denen sich ein vorderer Arm zur Schachtvorderseite hin an der Chassisplatte abstützt und ein hinterer Arm zur Laufwerks-Hinterseite hin gegen den Schieber drückt. Eine solche Belastungsfeder ist einfach aufgebaut und ausreichend elastisch, um den Schieber und den Kassettenschacht weich in ihren Spielstellungen festzudrücken.

Nach einer weiteren Ausgestaltung der Erfindung ist vorgesehen, daß das freie Ende des hinteren Federarmes in einem in Einschub-/Auswerfrichtung verlaufenden Führungsschlitz der Chassisplatte geführt ist, über den ein Schieberteil hinweg fahren kann. Der hintere Federarm kann so nicht unbeabsichtigt seitlich ausweichen und den Kontakt mit dem Schieber verlieren.

Die Andruckkraft der Belastungsfeder ist nur am Ende der Schieber-Einzugs- und der Kassetten-Absenkbewegung nötig. Bei weiteren Bewegungsvorgängen des Schiebers kann die Belastungsfeder sogar stören. Deshalb ist nach einer weiteren Ausgestaltung der Erfindung vorgesehen, daß der Führungsschlitz zur Lademechanismus-Einschubseite hin aus seinem sich in Auswerfrichtung erstreckenden Verlauf vom Schieber weg zur Lademechanismus-Außenseite hin abbiegt, so daß der hintere Federarm vom nach vorn laufenden Schieber seitlich wegdrückbar ist, bis der Schieber am hinteren Federarm vorbei läuft. Der Schieber drückt damit bei seiner Bewegung in Auswerfrichtung den hinteren Federarm beiseite, so daß die Belastungsfeder nach dem Beiseitedrücken weitere Auswerfbewegungen und auch die Einzugbewegung in ihrem Anfang nicht belastet. Erst wenn der Schieber weit genug in Einzugrichtung eingefahren ist, läuft der hintere Federarm wieder auf den Schieber auf und belastet diesen in Einzugsrichtung.

Die Erfindung wird anhand der Zeichnung näher erläutert. Es zeigen:
Fig. 1 in schaubildlicher Darstellung einen Lademechanismus für Magnetbandkassetten, der bei einem Magnetbandkassettengerät zum Einsatz kommt und einen Schieber zum Heben und Senken eines Kassettenschachtes aufweist,
Fig. 2 und 3 Seitenansichten des Lademechanismus bei verschiedenen Stellungen des Kassettenschachtes,
Fig. 4 eine schaubildliche Darstellung der Führung des hinteren Belastungsfederarmes einer Belastungsfeder, die am Ende der Einzugsbewegung den Schieber in Einzugsrichtung belastet.
Fig. 5 eine seitlich aus ihrem Wirkbereich herausgedrückte Belastungsfeder.

Jedes Magnetbandgerät ist mit einem Lademechanismus versehen, der es möglich macht, eine Magnetbandkassette in das Gerät einzubringen und die Kassette innerhalb des Geräts dann in eine Spielposition zu überführen, wobei nicht dargestellte Wickeldorne in die Spulen der Magnetbandkassette eingreifen.

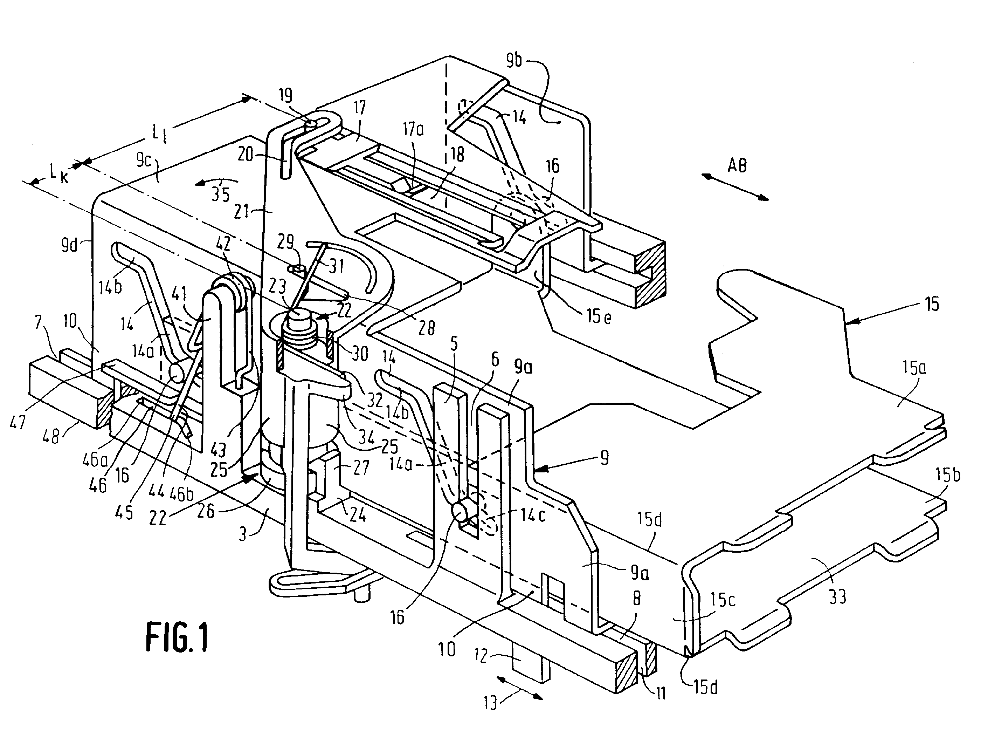

Ein solcher Lademechanismus ist in Fig. 1 schaubildlich dargestellt und auf einer ihm eigenen Chassisplatte 3 aufgebaut. Auf der Chassisplatte 3 ist wenigstens eine vertikal stehende Stützplatte 5 vorgesehen, die eine nur vertikale Führung 6 aufweist, die einen Stützplattenschlitz 6 bildet. In der Chassisplatte 3 sind Führungen 7 und 8 vorgesehen, die einen Schieber 9 in Einzug- und Auswerfrichtung AB vertikal stehend und an der vertikalen Stützplatte 5 anliegend führen. Die Führungen 7 bestehen aus Nuten, in denen Stege 10 des Schiebers 9 in der Verschieberichtung AB verschieblich sind. An den Steg 10 der Führung 8 schließt sich noch ein Kupplungssteg 12 an, der durch einen Durchbruch 11 der Chassisplatte 3 hindurchgreift. Der Kupplungssteg 12 ist auf nicht dargestellte Weise von einem nicht dargestellten Einzugsmechanismus des Magnetbandgerätes in Richtung eines Doppelpfeiles 13 hin und her schiebbar. Die Bewegungsrichtung entspricht der Einzugs- und Auswerfrichtung AB.

Der Schieber 9 besteht aus einem vorderen Schieberteil 9a und einem hinteren Schieberteil 9b, die über eine horizontal verlaufende Schieberverbindungsplatte 9c verbunden sind. Ebenso kann noch an den hinteren Rändern 9d eine die hinteren Ränder verbindende Rückplatte vorgesehen sein. In den Schieberteilen 9a, 9b sind Liftschlitze 14 vorgesehen. Jeder Liftschlitz 14 besteht aus einem Mittelteil 14a, das gegenüber dem vertikalen Verlauf des Stützplattenschlitzes 6 geneigt ist um einen bestimmten Neigungswinkel von beispielsweise 8°. Alle Mittelteile 14a der Schlitze 14 sind um den gleichen Neigungswinkel gegenüber der Vertikalen geneigt. An die geneigten oberen Enden der Mittelteile 14a der Liftschlitze 14 schließen sich im wesentlichen horizontale, zur Mechanismus-Hinterseite verlaufende hintere Schlitzenden 14b an, die eine Überhubtoleranz für die Auswerfbewegung des Schiebers sichern. An die unteren Enden der Mittelteile 14a schließen sich in Absenkrichtung geneigt nach vorn verlaufende vordere Schlitzenden 14c an, die eine Überhubtoleranz für das Ende der Einzugbewegung sicherstellen.

Zwischen den Schieberplattenteilen 9a und 9b ist ein Kassettenschacht 15 angeordnet. Dieser Kassettenschacht 15 besteht im wesentlichen aus zwei in horizontalen Ebenen auf Abstand übereinander angeordneten Leitplatten 15a, 15b, die an auf derselben Laufwerksseite befindlichen Längskanten 15d über eine Führungsplatte 15c verbunden sind. Die Führungsplatte 15c weist zwei Bolzen 16 auf, die seitlich aus ihr hervorstehen und in den in der Zeichnung vorn gelegenen Liftschlitz 14 des Schiebers eingreifen. Am hinteren gelegenen Teil des Kassettenschachtes 15 ist eine Lasche 15e mit einem weiteren Bolzen 16 versehen, der in den in der Zeichnung hinten gelegenen Liftschlitz 14 des Schieberteiles 9b eingreift. Im vorn gelegenen Teil des Lademechanismus durchgreift wenigstens ein Bolzen 16 den Liftschlitz 14 und den Stützplattenschlitz 6. Durch ein Vor- und Zurückschieben des Schiebers 9 mittels des Kupplungssteges 12 wird der Kassettenschacht 15 auf und ab bewegt.

Zum Einziehen und Auswerfen einer Kassette dient ein Kassettenmitnehmer 17, der in einem Führungsschlitz 18 der Schieberverbindungsplatte 9c geführt ist. Der Führungsschlitz 18 verläuft in Richtung der Doppelpfeile 13 bzw. AB.

Der Kassettenmitnehmer 17 ist mit einem Mitnehmerstift 19 versehen, der durch einen Schlitz 20 eines Betätigungshebels 21 hindurchgreift. Dieser Betätigungshebel 21 weist eine Lagerung 22 auf. Diese Lagerung 22 besteht aus einer aufrecht stehenden Lagerachse 23, die an einer mit der Chassisplatte 3 verbundenen Stütze 24 vorgesehen ist. Vorzugsweise handelt es sich dabei um ein an die Chassisplatte 3 angespritztes Spritzteil. Um die Lagerachse 23 herum erstreckt sich eine Lagerhülse 25, die Bestandteil des Betätigungshebels 21 ist. Die Lagerhülse 25 weist an ihrem unteren Ende einen Wulst 26 auf, der von einem Überwurfhaken 27 der Stütze 24 übergriffen wird.

In dem Betätigungshebel 21 befindet sich ein Führungsschlitz 28, durch den ein an der Schieberverbindungsplatte 9c angeordneter Kupplungsstift 29 hindurchgreift.

Die Lagerachse 23 befindet sich seitlich außerhalb des Schiebers 9. Durch das Kuppeln des Schiebers 9 über den Kupplungsstift 29 mit dem Betätigungshebel 21 entstehen zwei unterschiedlich lange Hebelarme Lₖ und Lₗ, die für den Verschiebeweg des Kassettenmitnehmers 17 von Bedeutung sind. Kurze Schieberbewegungen verursachen bereits lange Verstellwege des Kassettenmitnehmers 17.

In dem oberen Teil der Lagerung 22 ist auf die Lagerachse 23 zunächst eine Rückführfeder 30 aufgesetzt. Die Hülse 25 des Betätigungshebels 21 greift über diese als Wendelfeder ausgebildete Rückführfeder 30 hinweg. Die Wendelfeder hat an ihren Enden je einen Endarm 31 und 32. Der Endarm 31 liegt von der Einschubseite 33 des Kassettenschachtes 15 her gesehen an dem Kupplungsstift 29 an. Der andere Endarm 32 stützt sich an einem Ausleger 34 der Lagerhülse 25 ab. Die Anordnung wirkt dabei als Rückführanordnung für die Kassette, falls der Einzugsmechanismus des Magnetbandgerätes nicht anspricht.

Im Bereich der Lagerung 22 ist an einem zur Chassisplatte 3 gehörigen Teil 41 eine Belastungsfeder 42 angeordnet, die nach Art einer Haarnadelfeder zwei auseinander strebende Federarme, einen vorderen Federarm 43 und einen hinteren Federarm 44 aufweist. Der vordere Federarm stützt sich an der Chassisplatte 3 in Auswerfrichtung drückend ab. Der hintere Federarm 44 greift mit seinem freien Ende 45 in einen Führungsschlitz 46 der Chassisplatte 3 ein. Der hintere Federarm 44 drückt in Richtung auf die Lademechanismus-Hinterseite 9d gegen eine Fläche 47a eines Ansatzes 47 des Schiebers 9. Dieser Ansatz 47 kann über den in Auswerfrichtung verlaufenden hinteren Teil 46a des Führungsschlitzes 46 hinweg fahren.

Der Führungsschlitz 46 biegt nach vorn und zur Lademechanismus-Außenseite 48 hin in einen Teil 46b ab, so daß der hintere Federarm 44 vom nach vorn laufenden Ansatz 47 seitlich wegdrückbar ist, wie sich Fig. 5 ergibt. Nach diesem Wegdrücken fährt der Schieber 9 mit seinem Ansatz 47 an dem nach außen weggedrückten freien Ende 45 des Federarmes 44 vorbei.

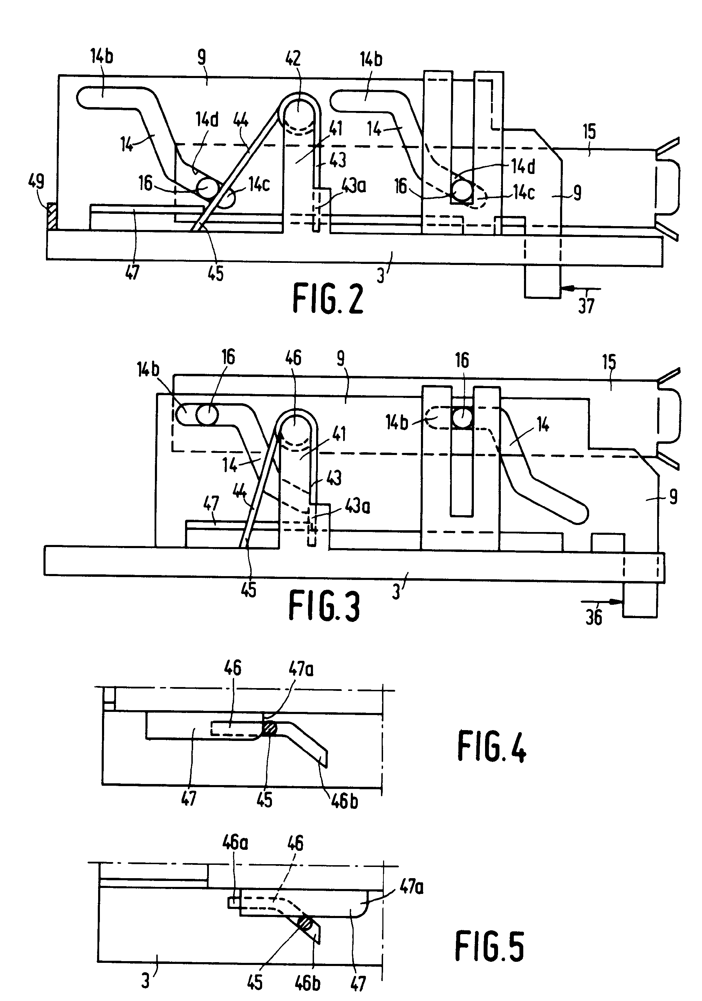

Die Fig. 2 und 3 zeigen in Seitenansicht zwei Stellungen des Kassettenschachtes 15, und zwar Fig. 2 den Kassettenschacht in abgesenkter Stellung und Fig. 3 den Kassettenschacht in angehobener Stellung. Man erkennt in Fig. 2, daß sich der vordere Federarm 43 der Feder 42 mit seinem freien Ende 43a an der Chassisplatte 3 abstützt. Der hintere Federarm 44 drückt gegen den Ansatz 47 des Schiebers 9 und drückt den Schieber 9 damit nach hinten in seine hintere Endstellung, die beispielsweise durch einen Anschlag 49 gebildet werden kann. Bei der in Fig. 2 dargestellten hintersten Endstellung des Schiebers 9 liegen die Bolzen 16 in den geneigten Schlitzteilen 14c und drücken gegen die Oberkanten 14d dieser geneigten Schlitzteile 14c. Damit wird der Kassettenschacht fest gegen die Chassisplatte 3 gedrückt, wenn er sich in Spielstellung befindet, und kann nicht klappern.

Fig. 3 zeigt den Kassettenschacht 15 in angehobener Stellung, wobei der Schieber 9 nach vorn gezogen ist in Richtung des Pfeiles 36. Die Bolzen 16 des Kassetten schachtes befinden sich in den hinteren Schlitzenden 14b. Der hintere Federarm 44 liegt mit seinem Ende 45 seitlich des Schieberansatzes 47 und belastet diesen damit nicht (Fig. 5).

Der Kassettenlademechanismus arbeitet wie folgt: In die Einschubseite 33 des Kassettenschachtes 15 wird eine nicht dargestellte Magnetbandkassette eingeschoben. Der Kassettenschacht befindet sich dabei in der aus Fig. 3 ersichtlichen oberen Stellung. Die Bolzen 16 des Kassettenschachtes 15 befinden sich in den hinteren Schlitzenden 14b der Liftschlitze 14. Die in Einschubrichtung vorn liegende Wickelspulenöffnung der nicht dargestellten eingeschobenen Kassette unterfährt einen Greifhaken 17a des Kassettenmitnehmers 17, bis dieser in die Wickelspulenöffnung der Kassette einfällt. Beim weiteren Einschieben nimmt der Kassettenmitnehmer 17 dann den Betätigungshebel 21 entgegen dem Uhrzeigersinn in Richtung eines Pfeiles 35 mit. In diesem Zeitpunkt ist vorgesehen, daß der nicht dargestellte Einzugsmechanismus des Magnetbandgerätes angeschaltet wird und dieser den Kupplungssteg 12 in Einzugsrichtung mechanisch mitnimmt. Wird der Einzugsmechanismus in Betrieb gesetzt und fährt der Schieber 9 nach hinten, dann fährt auch der Kupplungsstift 29 nach hinten. Der Schieber kann so bis in seine hintere Endstellung fahren, wobei der Kassettenschacht 15 über die Bolzen 16 und die Liftschlitze 14 in den Führungsschlitzen 6 abgesenkt wird.

Spricht der Lademechanismus nicht an und bleibt der Schieber 9 damit in seiner Ausgangsstellung stehen, dann bleibt auch der Kupplungsstift 29 stehen, und die Wendelfeder 30 spannt sich beim Einschieben der Kassette von Hand zwischen dem Kupplungsstift 29 und dem Ausleger 34, der entgegen dem Uhrzeigersinn schwenkt. Dies hat zur Folge, daß der Betätigungshebel 21 die Kassette wieder zurückstößt, sobald die Einschiebekraft der die Kassette einschiebenden Hand des Benutzers aufhört. Bei einem Gerätefehler kann die Kassette also niemals innerhalb des Schachtes verschwinden. Wird der Schieber 9 nach dem Von-Hand-Einschieben einer Kassette und dem In-Betriebsetzen des nicht dargestellten Gerätemechanismus mechanisch in Richtung eines Pfeiles 37 in Einzugsrichtung bewegt, dann fährt der Kassettenschacht 15 abwärts in die aus der aus Fig. 1 und Fig. 2 ersichtliche Stellung nieder. In dieser Stellung greifen die Wickeldorne des Magnetbandgerätes in die Wickelspulen der abgesenkten Magnetbandkassette ein. Der Schieber 9 kann nun in den Schlitzbereichen 14c noch einen gewissen Überhub in Einzugsrichtung 37 vollziehen, beispielsweise um Toleranzen auszugleichen. Die Schlitzränder 14d drücken die Bolzen 16 und damit den Kassettenschacht nach unten gegen die Chassisplatte 3.

## Patentansprüche

1. Magnetbandkassettengerät mit einem zum Abspielen von Magnetbandkassetten dienenden Laufwerk, das einen Kassettenlademechanismus aufweist, zu dem ein die Magnetbandkassette aufnehmender Kassettenschacht (15) gehört, der mit seitlich vorstehenden Bolzen (16) in ortsfesten vertikalen Führungen (6) zum Absenken in eine Spielposition und zum Anheben in eine Auswerfposition geführt ist, wobei die Bolzen (16) zusätzlich durch zur Vertikalen geneigte Schlitze (14) eines Schiebers (9) hindurchgreifen, dadurch gekennzeichnet, daß die Führungen (6) nur eine vertikale Längserstreckung aufweisen zum Absenken und Anheben des Kassettenschachtes (15) und daß die Einzugs- und Auswerfbewegung der Magnetbandkassette ein Kassettenmitnehmer (17) übernimmt, der von einem Betätigungshebel (21) zwischen einer Auswerf- und einer Einzugstellung bewegbar ist, wobei über die Verschiebebewegung des Schiebers (9) zugleich der mit dem Schieber verschwenkbar gekuppelte Betätigungshebel (21) zum Einziehen und Auswerfen der Kassette bewegt wird.

2. Magnetbandkassettengerät nach Anspruch 1, dadurch gekennzeichnet, daß der Kassettenmitnehmer (17) in einem Schlitz (18) des Schiebers (9) geführt ist.

3. Magnetbandkassettengerät nach Anspruch 1, dadurch gekennzeichnet, daß der Betätigungshebel (21) um eine seitlich von Schieber (9) und Kassettenschacht (15) angeordnete Lagerachse (23) am Chassis (3) des Laufwerkes schwenkbar angeordnet ist.

4. Magnetbandkassettengerät nach einem der vorhergehenden Ansprüche 1 bis 3, dadurch gekennzeichnet, daß am Schieber (9) ein Kupplungsstift (29) vorgesehen ist, der durch einen Schlitz (28) des Betätigungshebels (21) greift und dafür sorgt, daß sich der Betätigungshebel (21) beim Bewegen des Schiebers (9) in Einzieh- oder Auswerfrichtung um ihn verschwenkt.

5. Magnetbandkassettengerät nach Anspruch 4, dadurch gekennzeichnet, daß am Betätigungshebel (21) eine Rückführfeder (30) vorgesehen ist, mittels der der Betätigungshebel (21) bei nicht in Betrieb gesetztem Laufwerk den Kassettenmitnehmer (17) in die Auswerfstellung der Kassette schiebt.

6. Magnetbandkassettengerät nach Anspruch 4, dadurch gekennzeichnet, daß der Betätigungshebel (21) die Lagerachse (23) mit einer Lagerhülse übergreift, die einen Ausleger (34) aufweist, der einen Anschlag für einen Endarm (32) der Rückführfeder (30) bildet, die mit einem Wendelteil zwischen der Lagerachse (23) und der Lagerhülse (25) angeordnet ist, und daß der andere Endarm (31) der Rückführfeder (30) den Kupplungsstift (29) hintergreift.

7. Magnetbandkassettengerät nach Anspruch 1, dadurch gekennzeichnet, daß die Schlitze (14) des Schiebers (9) in dem Bereich, in dem die Bolzen (16) den Kassettenschacht nahezu in die Spielstellung abgesenkt haben, zur Lademechanismus-Einschubseite (33) hin abknicken in einen zum Schachtverlauf leicht geneigt verlaufenden Schlitzteil (14c) und daß die Bolzen (16) dann, wenn der Schieber (9) seine Endstellung erreicht hat, in dem geneigten Bereich gegen die oberen Schlitzwände (14d) gedrückt werden.

8. Magnetbandkassettengerät nach Anspruch 1, dadurch gekennzeichnet, daß eine Belastungsfeder (42) vorgesehen ist, die den Schieber (9) wenigstens am Ende der einschubbewegung in seine hintere Endstellung drückt.

9. Vorrichtung nach Anspruch 8, dadurch gekennzeichnet, daß die Belastungsfeder (42) auseinander stehende Federarme (43, 44) (Haarnadelfeder) aufweist, von denen sich ein vorderer Arm (43) zur Schachtvorderseite (33) hin an der Chassisplatte (3) abstützt und ein hinterer Arm (44) zur Laufwerks-Hinterseite (9d) hin gegen den Schieber (9) drückt.

10. Vorrichtung nach Anspruch 9, dadurch gekennzeichnet, daß das freie Ende (45) des hinteren Federarmes (44) in einem in Einschub-/Auswerfrichtung verlaufenden Führungsschlitz (46) der Chassisplatte (3) geführt ist, über den ein Schieberteil (47) hinweg fahren kann.

11. Vorrichtung nach Anspruch 10, dadurch gekennzeichnet, daß der Führungsschlitz (46) zur Lademechanismus-Einschubseite (33) hin aus seinem sich in Auswerfrichtung erstreckenden Verlauf vom Schieber (9) weg zur Lademechanismus-Außenseite (48) hin abbiegt, so daß der hintere Federarm (44) vom nach vorn laufenden Schieber (9) seitlich wegdrückbar ist, bis der Schieber am hinteren Federarm (44) vorbei läuft.

## Claims

1. A magnetic tape cassette apparatus having a deck which serves for playing magnetic tape cassettes and has a cassette loading mechanism comprising a cassette holder (15) which is adapted to receive the magnetic tape cassette and is guided by means of laterally projecting pins (16) in stationary vertical guideways (6) in order to be lowered into a play position and to be raised into an eject position, the pins (16) also extending through slots (14) in a slide (9), which slots are inclined relative to the vertical, characterised in that the guideways (6) have only vertically extending longitudinal portions for lowering and raising the cassette holder (15), and in that the draw-in and eject movement of the magnetic tape cassette is taken over by a cassette driver (17) which is movable between an eject position and a draw-in position by an actuating lever (21), the actuating lever (21), which is pivotably coupled to the slide (9), being moved simultaneously, for the purpose of drawing in and ejecting the cassette, *via* the sliding movement of the slide.

2. A magnetic tape cassette apparatus as claimed in Claim 1, characterised in that the cassette driver (17) is guided in a slot (18) in the slide (9).

3. A magnetic tape cassette apparatus as claimed in Claim 1, characterised in that the actuating lever (21) is arranged on the chassis (3) of the deck so as to be pivotable about a journal (23) arranged adjacent the slide (9) and the cassette holder (15).

4. A magnetic tape cassette apparatus as claimed in any one of the Claims 1 to 3, characterised in that the slide (9) carries a coupling pin (29) which extends through a slot (28) in the actuating lever (21) and which causes the actuating lever (21) to be pivoted about it when the slide (9) moves in the draw-in or eject direction.

5. A magnetic tape cassette apparatus as claimed in Claim 4, characterised in that the actuating lever (21) has been provided with a return spring (30) by means of which actuating lever (21) pushes the cassette driver (17) into the eject position of the cassette when the deck is not operative.

6. A magnetic tape cassette apparatus as claimed in Claim 4, characterised in that the actuating lever (21) engages over the journal (23) with a bearing sleeve having a projection (34) which forms a stop for one end arm (32) of the return spring (30) whose helical portion is arranged between the journal (23) and the bearing sleeve (25), and in that the other end arm (31) of the return spring (30) engages behind the coupling pin (29).

7. A magnetic tape cassette apparatus as claimed in Claim 1, characterised in that in the area in which the pins (16) have lowered the cassette holder substantially into the play position the slots (14) in the slide (9) bend towards the insertion side (33) of the loading mechanism to form a slot portion (14c) which is slightly inclined relative to the holder orientation, and in that in the inclined area the pins (16) are pressed against the upper slot walls (14d) when the slide (9) has reached its end position.

8. A magnetic tape cassette apparatus as claimed in Claim 1, characterized in that there has been provided a loading spring (42) which, at least at the end of the insertion movement, presses the slide (9) into its rearward end position.

9. An apparatus as claimed in Claim 8, characterised in that the loading spring (42) has diverging spring arms (43, 44) (hairpin spring), of which a forward arm (43) acts on the chassis plate (3) in the direction of the holder front (33) and a rearward arm (44) acts against the slide (9) in the direction of the rear (9d) of the deck.

10. An apparatus as claimed in Claim 9, characterised in that the free end (45) of the rearward spring arm (44) is guided in a guide slot (46) which extends in the chassis plate (3) in the insertion/eject direction, a slide portion (47) being movable beyond said guide slot.

11. An apparatus as claimed in Claim 10, characterised in that from its portion which extends in the eject direction towards the insertion side (33) of the loading mechanism the guide slot (46) bends away from the slide (9) towards the outer side (48) of the loading mechanism, enabling the rearward spring arm (44) to be pressed aside by the slide (9) which is moving forward, until the slide has moved past the rearward spring arm (44).

## Revendications

1. Magnétocassette avec un mécanisme d'entraînement servant à la lecture de cassettes de bande magnétique, qui présente un mécanisme de chargement de cassette auquel est affecté un compartiment à cassette (15) recevant la cassette de bande magnétique, qui est guidé par des chevilles (16) faisant saillie latéralement dans des glissières (6) verticales fixes pour l'abaissement dans une position de lecture et le soulèvement dans une position d'éjection, les chevilles (16) pénétrant, en outre, dans des fentes (14) d'un coulisseau (9) inclinées par rapport à la verticale, caractérisé en ce que les glissières (6) ne présentent qu'une extension longitudinale verticale pour l'abaissement et le soulèvement du compartiment à cassette (15) et en ce que les mouvements d'introduction et d'éjection de la cassette de bande magnétique sont assurés par un taquet d'entraînement de cassette (17) qui peut être déplacé par le biais d'un levier d'actionnement (21) entre une position d'éjection et une position d'introduction, étant entendu que, pendant la course du coulisseau (9) le levier d'actionnement (21) accouplé à pivotement au coulisseau sera, en même temps, déplacé en vue de l'introduction et de l'éjection de la cassette.

2. Magnétocassette selon la revendication 1, caractérisé en ce que le taquet d'entraînement de cassette (17) est guidé dans une fente (18) du coulisseau (9).

3. Magnétocassette selon la revendication 1, caractérisé en ce que le levier d'actionnement (21) est monté à pivotement sur le châssis (3) du mécanisme d'entraînement autour d'un axe de palier (23) disposé latéralement par rapport au coulisseau (9) et au compartiment à cassette (15).

4. Magnétocassette selon l'une quelconque des revendications précédentes 1 à 3, caractérisé en ce qu'un ergot d'accouplement (29) qui traverse une fente (28) du levier d'actionnement (21) est prévu sur le coulisseau (9) et assure que le levier d'actionnement (21) pivote autour de lui lors du déplacement du coulisseau (9) dans la direction d'introduction ou d'éjection.

5. Magnétocassette selon la revendication 4, caractérisé en ce que le levier d'actionnement (21) présente un ressort de rappel (30) au moyen duquel le levier d'actionnement (21) peut faire coulisser le taquet d'entraînement de cassette (17) dans la positon d'éjection de la cassette lorsque le mécanisme d'entraînement (17) n'est pas en fonction.

6. Magnétocassette selon la revendication 4, caractérisé en ce que le levier d'actionnement (21) est engagé sur l'axe de palier (23) avec une douille-palier qui présente une saillie (34) formant une butée pour un bras d'extrémité (32) du ressort de rappel (30) qui est disposé par une partie hélicoïdale entre l'axe de palier (23) et la douille-palier (25) et que l'autre bras d'extrémité (31) du ressort de rappel (30) attaque l'ergot d'accouplement (29) par l'arrière.

7. Magnétocassette selon la revendication 1, caractérisé en ce que les fentes (14) du coulisseau (9) dans la région dans laquelle les chevilles (16) ont abaissé le compartiment à cassette presque en position de lecture, sont infléchies vers le côté d'introduction du mécanisme de chargement (33) en une partie de fente légèrement inclinée par rapport au trajet du compartiment (14c) et que les chevilles (16) sont pressées dans la région inclinée contre les parois supérieures des fentes (14d), lorsque le coulisseau (9) a atteint sa position de fin de course.

8. Magnétocassette selon la revendication 1, caractérisé en ce qu'il comporte un ressort de sollicitation (42) qui presse le coulisseau (9) du moins à la fin du mouvement d'introduction dans sa position de fin de course postérieure.

9. Dispositif selon la revendication 8, caractérisé en ce que le ressort de sollicitation (42) présente des bras de ressort s'écartant l'un de l'autre (43, 44) (ressort en épingle à cheveux) dont un bras antérieur (43) prend appui sur la plaque de châssis (3) en direction du côté antérieur du compartiment (33) et un bras postérieur (44) est pressé contre le coulisseau (9) dans la direction de la face postérieure du mécanisme d'entraînement (9d).

10. Dispositif selon la revendication 9, caractérisé en ce que l'extrémité libre (45) du bras de ressort (44) postérieur est guidée dans une fente de guidage (46) de la plaque de châssis (3) s'étendant dans la direction d'introduction ou d'éjection, pardessus laquelle une partie du coulisseau (47) peut dépasser.

11. Dispositif selon la revendication 10, caractérisé en ce que la fente de guidage (46) vers le côté d'introduction du mécanisme de chargement (33) s'infléchit depuis son tracé s'étendant dans la direction d'éjection à partir du coulisseau (9) vers le côté extérieur du mécanisme de chargement (48), de sorte que le bras de ressort postérieur (44) peut être repoussé latéralement par le coulisseau (9) qui avance jusqu'à ce que le coulisseau franchisse le bras de ressort postérieur (44).
